Europäisches Patentamt

European Patent Office

Office européen des brevets

(11) Veröffentlichungsnummer: **0 373 145**
**A1**

(12) ## EUROPÄISCHE PATENTANMELDUNG

(21) Anmeldenummer: **89890305.9**

(51) Int. Cl.5: **F02F 1/42**

(22) Anmeldetag: **27.11.89**

(30) Priorität: **02.12.88 AT 2967/88**

(43) Veröffentlichungstag der Anmeldung:
**13.06.90 Patentblatt 90/24**

(84) Benannte Vertragsstaaten:
**DE FR IT**

(71) Anmelder: **AVL Gesellschaft für
Verbrennungskraftmaschinen und
Messtechnik mbH.Prof.Dr.Dr.h.c. Hans List
Kleiststrasse 48
A-8020 Graz(AT)**

(72) Erfinder: **Kirchweger, Karl
Stiftingtalstrasse 71
A-8010 Graz(AT)**
Erfinder: **Killmann, Irolt, Dipl.-Ing. Dr.
Am Rehgrund 20
A-8043 Graz(AT)**

(74) Vertreter: **Krause, Walter, Dr. Dipl.-Ing. et al
Postfach 200 Singerstrasse 8
A-1014 Wien(AT)**

(54) **Brennkraftmaschine mit je zwei Einlassventilen pro Zylinder.**

(57) Bei einer Brennkraftmaschine mit mindestens zwei Zylindern und mit je zwei Einlaßventilen pro Zylinder, wobei die zu den Einlaßventilen führenden Einlaßkanäle zweier benachbarter Zylinder nebeneinander und bezüglich der Symmetrale der beiden Zylinder symmetrisch angeordnet sind und der Zylinderkopf einstückig ausgebildet ist und einen gemeinsamen Eintrittsflansch mit einem Eintrittskanal aufweist, der an einem Schraubenbutzen für die Zylinderkopfschrauben vorbei mit den durch Leitflächen gebildeten zu den einzelnen Einlaßkanälen führenden Einlaßkanälen strömungsverbunden ist, führen die Einlaßkanäle (9′,10′), welche den in Strömungsrichtung näher liegenden Einlaßventilen (4′,5′) zugeordnet sind, auf einer Seite des Schraubenbutzens (18) und die den weiter entfernten Einlaßventilen (4,5) zugeordneten Einlaßkanäle (9,10) an der gegenüberliegenden Seite des Schraubenbutzens (18) vorbei, und die Einströmventile (4,4′;5,5′) der benachbarten Zylinder (2,3) sind so gesteuert, daß diesen die Verbrennungsluft mit zeitlichem Abstand zugeführt wird.

Fig. 3

# BRENNKRAFTMASCHINE MIT JE ZWEI EINLASSVENTILEN PRO ZYLINDER

Die Erfindung betrifft eine Brennkraftmaschine mit mindestens zwei Zylindern und mit je zwei Einlaßventilen pro Zylinder, wobei die zu den Einlaßventilen führenden Einlaßkanäle zweier benachbarter Zylinder nebeneinander und bezüglich der Symmetrale der beiden Zylinder symmetrisch angeordnet sind und der Zylinderkopf einstückig ausgebildet ist und einen gemeinsamen Eintrittsflansch mit einem Eintrittskanal aufweist, der an einem Schraubenbutzen für die Zylinderkopfschrauben vorbei mit den durch Leitflächen gebildeten zu den einzelnen Einlaßventilen führenden Einlaßkanälen strömungsverbunden ist.

Bei bekannten Brennkraftmaschinen dieser Art ist der Einlaßkanal so gestaltet, daß man um die vier Ventile gewissermaßen eine Einhüllende legt und eine Verbindung zum Eintrittsflansch schafft. Diese Bauart nützt zwar den vorhandenen Raum gut aus, aber sie nimmt nicht bedacht auf die Strömung, die dann auch völlig ungeregelt verläuft. Die Durchflußwerte derartiger Kanäle sind schlecht, eine Ausrichtung der Strömung, um den für die Gemischbildung beim Dieselmotor notwendigen Drall im Zylinder zu erzeugen, ist nicht möglich.

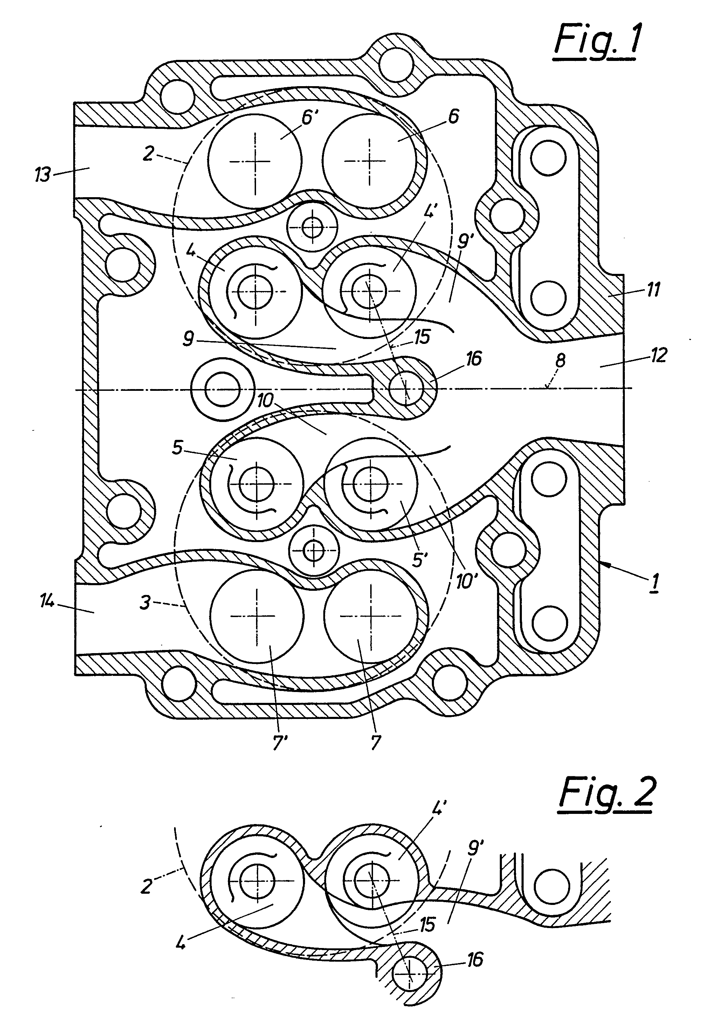

Zur Behebung dieser Mängel sind Bauformen nach den Fig. 1 und 2 bekannt, welche einen wesentlichen Schwachpunkt in der Engstelle zwischen dem ersten Ventil und dem Schraubenbutzen hat. Da der Schraubenbutzen bei jedem Motor etwa an dieser Stelle gebraucht wird, und die einfachste Art der Ventilbetätigung auf die Lage des Ventils an etwa dieser Stelle festlegt, entsteht die Engstelle zwangsläufig.

Bei den derzeit üblichen Zylinderabständen und Schraubenbutzengrößen ist dann der für den Kanal verbleibende Querschnitt wesentlich kleiner, als er im Hinblick auf die gewünschten Durchflußwerte sein sollte. Hier muß die ganze Luft für das in Strömungsrichtung zweite Ventil und ein Teil der Luft für das erste Ventil hindurch. Wenn man zur Drallerzeugung den Kanal zum erstenVentil als Spiralkanal gestaltet, wie in Fig. 2 dargestellt, bei dem die Luft exzentrisch zum Ventil zugeführt wird, dann ist an der Engstelle der Anteil der Luft vom ersten Ventil, der bereits aus dem Ventil in den Zylinder geströmt ist, relativ klein, sodaß ein noch größerer Teil der Luft für das erste Ventil zusätzlich zu dem für das zweite Ventil durch die Engstelle muß. Auch bei dieser Bauart ist daher der Durchflußwert nicht befriedigend.

Der Erfindung liegt die Aufgabe zugrunde, diese Nachteile der bekannten Ausführungen zu vermeiden und dabei optimale Strömungsbedingungen bzw. Strömungswerte zu erzielen.

Die Erfindung besteht darin, daß die Einlaßkanäle, welche den in Strömungsrichtung näher liegenden Einlaßventilen zugeordnet sind, auf einer Seite des Schraubenbutzens und die den weiter entfernten Einlaßventilen zugeordneten Einlaßkanäle an der gegenüberliegenden Seite des Schraubenbutzens vorbeiführen, und daß die Einströmventile der benachbarten Zylinder so gesteuert sind, daß diesen die Verbrennungsluft mit zeitlichem Abstand zugeführt wird. Dabei wird daher der Raum des Kanals für einen Zylinder in den Zeiten, wo seine Ventile geschlossen sind, für den Transport der Luft zum anderen Zylinder verwendet. Es stehen dabei für die Füllung der beiden Zylinder jeweils genügend große Kanalquerschnitte zur Verfügung.

Eine auf den ersten Blick einschlägige Anordnung ist in der EP-PS 0 170 131 beschrieben, wobei die Einlaßkanäle eines Zylinderkopfes mit zwei Ventilen pro Zylinder vorgesehen sind. Die beiden nebeneinanderliegenden Einlaßkanäle haben zwar einen Verbindungskanal, sind aber an sich nicht siamesisch zusammengewachsen und benützen nicht einen gemeinsamen Einlaßflansch. Es besteht keine Knappheit an Strömungsquerschnitt, der Zweck der Anordnung ist die Erzielung hoher, je nach Drehzahl einstellbarer, Verwirbelung, die durch eine seitlich zum Hauptstrom zugemischte Nebenströmung erzielt werden soll.

In weiterer Ausgestaltung der Erfindung kann der Schraubenbutzen vier Seitenflächen aufweisen, welche die Leitflächen, welche die Einlaßkanäle bilden, ergänzen. Dabei ist der Schraubenbutzen nicht nur kein Strömungshindernis, sondern er dient in vorteilhafter Weise mit zur Bildung der Einströmkanäle.

Die Erfindung ermöglicht es, die zu den näher liegenden Einströmventilen führenden Einströmkanäle als Drallkanäle auszubilden und dabei dem weiter entfernten Einlaßventil genügend Frischladung zuzuführen. Das ergibt optimale Strömungsverhältnisse in den Zylindern.

Die Erfindung wird nachfolgend anhand der Zeichnungen näher erläutert. Es zeigen:

Fig. 1 den Zylinderkopf einer bekannten Brennkraftmaschine,

Fig. 2 ein abgeändertes Detail zur Ausführung nach Fig. 1,

Fig. 3 den Zylinderkopf einer Brennkraftmaschine gemäß der Erfindung im Schnitt senkrecht zu den Zylinderachsen und

Fig. 4 dazu ein Detail in abgeänderter Form.

Entsprechende oder gleiche Teile sind mit den selben Bezugszeichen versehen.

Der in Fig. 1 dargestellte Zylinderkopf 1 einer Brennkraftmaschine bekannter Art ist einstückig ausgebildet und umfaßt zwei nebeneinanderliegende Zylinder 2 und 3, welche durch ihre gestrichelt eingezeichneten Bohrungen angedeutet sind. Im Zylinderkopf 1 sind für jeden Zylinder 2, 3 zwei Einlaßventile 4, 4' bzw. 5, 5' und je zwei Auslaßventile 6, 6' bzw. 7, 7' vorgesehen, welche bezüglich der Symmetrale 8 der beiden Zylinder 2, 3 symmetrisch angeordnet sind. Ebenfalls symmetrisch bezüglich der Symmetrale 8 sind die zu den Einlaßventilen 4, 4' führenden Einlaßkanäle 9, 9' und die zu den Einlaßventilen 5, 5' führenden Einlaßkanäle 10, 10', welche von dem den Einlaßflansch 11 durchsetzenden Eintrittskanal 12 gespeist werden. Auf der dem Eintrittsflansch 11 gegenüberliegenden Seite des Zylinderkopfes 1 münden die Auslaßkanäle 13 und 14, welche den Auslaßventilen 6, 6' bzw. 7, 7' zugeordnet sind.

Diese bekannte Bauform hat einen wesentlichen Schwachpunkt in der Engstelle 15 zwischen dem ersten Einlaßventil 4' und dem Schraubenbutzen 16. Durch diese Engstelle muß die gesamte Frischladung für das Ventil 4 und ein Teil der Frischladung des Ventiles 4' hindurchtreten. Bei den heute üblichen Zylinderabständen und Schraubenbutzengrößen ist dann die Engstelle wesentlich kleiner als für eine zufriedenstellende Einströmung der Frischladung erforderlich wäre.

Wenn man zur Erzeugung eines Dralls in den Zylindern 2 und 3 die Kanäle 9' und 10', welche zu den Einlaßventilen 4' bzw. 5' führen, als Spiralkanäle gestaltet - siehe Fig. 2 - bei dem die Frischladung exzentrisch dem Einlaßventil zugeführt wird, dann ist an der Engstelle 15 der Anteil der Frischladung für das Einlaßventil 4' noch größer, welcher Anteil zusätzlich zu dem für das Ventil 4 bestimmten Anteil durch die Entstelle 15 strömen muß. Es liegt auf der Hand, daß deshalb der Durchflußwert nicht zufriedenstellend sein kann.

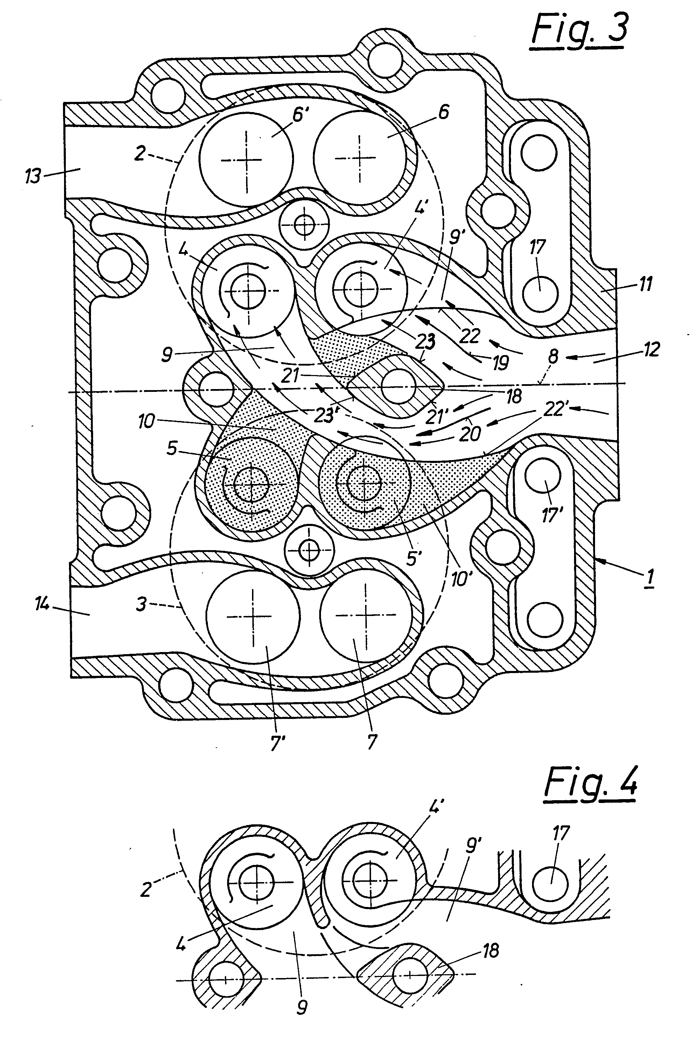

Der in Fig. 3 dargestellte Zylinderkopf 1 einer erfindungsgemäßen Brennkraftmaschine umfaßt ebenfalls zwei Zylinder 2 und 3, welchen je zwei Einlaßventile 4, 4' und 5, 5', die ebenso wie die Auslaßventile 6, 6' und 7, 7' in Bezug auf die Symmetrale 8 symmetrisch angeordnet sind. Vom Eintrittsflansch 11 kommend, strömt die Frischladung zwischen den Stoßstangen 17 und 17' für die Einlaßventile 4, 4' bzw. 5, 5' hindurch und teilt sich am Butzen 18 für eine der Zylinderkopfschrauben in einen Strom 19 für das bezüglich der Strömungsrichtung nähere Einlaßventil 4' und einen Strom 20 für das entferntere Einlaßventil 4 des in der Zeichnung obenliegenden Zylinders 2. Während der Strom 19 direkt zum Ventil 4' gelangt, holt der Strom 20 um den Butzen 18 herum über den Kanalteil des benachbarten Zylinders 3 aus, bis er zum Ventil 4 gelangt. Er benützt den Raum des Kanalteils für den benachbarten Zylinder 3 mit. Die punktiert gezeichneten Räume sind in dieser Zeit Totluftgebiete bis sich die Zustände umkehren, wenn der Zylinder 3 gefüllt wird. Damit steht der Querschnitt an der Engstelle zweimal zur Verfügung. Der Eintrittskanal ist mit 12 und die Einlaßkanäle zu den Einlaßventilen 4, 4' mit 9 bzw. 9' und die Einlaßkanäle zu den Einlaßventilen 5 und 5' mit 10 bzw. 10' bezeichnet.

Der Butzen 18 für eine nicht dargestellte Zylinderkopfschraube weist vier strömungsgünstige Umfangsflächen 21, 23 und 21', 23' auf, welche zusammen mit den Leitflächen 22 und 22' die Ströme 19 bzw. 20 begrenzen.

Bei der Variante nach Fig. 4 ist der Einlaßkanal 9' als Spiralkanal ausgebildet. Man erkennt, daß in diesem Fall die Verbesserung gegenüber der bekannten Ausführung nach Fig. 2 besonders gravierend ist.

## Ansprüche

1. Brennkraftmaschine mit mindestens zwei Zylindern und mit je zwei Einlaßventilen pro Zylinder, wobei die zu den Einlaßventilen führenden Einlaßkanäle zweier benachbarter Zylinder nebeneinander und bezüglich der Symmetrale der beiden Zylinder symmetrisch angeordnet sind und der Zylinderkopf einstückig ausgebildet ist und einen gemeinsamen Eintrittsflansch mit einem Eintrittskanal aufweist, der an einem Schraubenbutzen für die Zylinderkopfschrauben vorbei mit den durch Leitflächen gebildeten zu den einzelnen Einlaßventilen führenden Einlaßkanälen strömungsverbunden ist, dadurch gekennzeichnet, daß die Einlaßkanäle (9' ,10'), welche den in Strömungsrichtung näher liegenden Einlaßventilen (4' ,5') zugeordnet sind, auf einer Seite des Schraubenbutzens (18) und die den weiter entfernten Einlaßventilen (4,5) zugeordneten Einlaßkanäle (9,10) an der gegenüberliegenden Seite des Schraubenbutzens (18) vorbeiführen, und daß die Einströmventile (4,4';5,5') der benachbarten Zylinder (2,3) so gesteuert sind, daß diesen die Verbrennungsluft mit zeitlichem Abstand zugeführt wird.

2. Brennkraftmaschine nach Anspruch 1, dadurch gekennzeichnet, daß der Schraubenbutzen (18) vier Seitenflächen (21,23, ;21' ,23') aufweist, welche die Leitflächen (22,22'), welche die Einlaßkanäle bilden, ergänzen.

3. Brennkraftmaschine nach Anspruch 1 oder 2, dadurch gekennzeichnet, daß die zu den näher liegenden Einströmventilen (4' ,5') führenden Einströmkanäle (9' ,10') als Drallkanäle ausgebildet sind.

*Fig.1*

*Fig.2*

_Fig. 3_

_Fig. 4_

<table>
<tr><td></td><td>Europäisches Patentamt</td><td></td></tr>
</table>

**Europäisches Patentamt**

# EUROPÄISCHER RECHERCHENBERICHT

Nummer der Anmeldung

EP    89 89 0305

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-1634971 (ANGLE) <br> * Seite 1, Zeile 94 - Seite 2, Zeile 8; Figuren 1-3 * | 1 | F02F1/42 |
| A | GB-A-465540 (FAIREY) <br> * Seite 2, Zeile 44 - Seite 2, Zeile 71; Figuren 1, 2 * | 1 | |
| A | US-A-3411490 (AKANA) <br> * Spalte 2, Zeile 49 - Spalte 3, Zeile 9; Figuren 1-4 * | 1 | |

| RECHERCHIERTE SACHGEBIETE (Int. Cl.5) |
|---|
| F02F <br> F02B <br> F01L |

**Der vorliegende Recherchenbericht wurde für alle Patentansprüche erstellt**

| Recherchenort | Abschlußdatum der Recherche | Prüfer |
|---|---|---|
| DEN HAAG | 05 MAERZ 1990 | LEFEBVRE L.J.F. |

EPO FORM 1503 03.82 (P0403)